# EUROPEAN PATENT APPLICATION

(11) **EP 4 830 914 A1**
(43) Date of publication of application: **28.10.2026**
(21) Application number: 26173216.8
(22) Date of filing: 20.04.2026
(51) Int. Cl.: B32B 27/08, B32B 27/18, B32B 27/20, B32B 27/22, B32B 27/32, C08L 23/14

(54) **UNORIENTED POLYPROPYLENE FILM**

(30) Priority: 22.04.2025 JP 2025070706
(71) Applicant: Toppan Holdings Inc., Tokyo 110-0016 (JP)
(72) Inventor: TAKAYANAGI, Kosuke, Tokyo, 110-0016 (JP); OGIHARA, Yu, Tokyo, 110-0016 (JP); NISHIHARA, Tsuguki, Tokyo, 110-0016 (JP)
(74) Representative: Hasegawa, Kan

(57) **Abstract**

There is provided an unoriented polypropylene film excellent in low-temperature sealing property, slipperiness, and impact resistance and also suitable as a sealant film for packaging materials. The An unoriented polypropylene film including a first layer having a heat sealing property, the first layer including a propylene-ethylene random copolymer (A) having a melting point of 140 to 148 °C, and a propylene-ethylene block copolymer (B), a content of the copolymer (A) being in a range of 65 to 90 mass%, a content of the copolymer (B) being in a range of 35 to 10 mass%, wherein the copolymer (B) has a sea-island structure in which domains containing a propylene-ethylene copolymer elastomer are dispersed in a matrix containing a propylene polymer, the propylene-ethylene copolymer elastomer having Mw: 500,000-1,000,000 and Mw/Mn:10-25, the first layer being free from any of a lubricant, an antiblocking agent, and a coloring material.

## Description

### FIELD

The present invention relates to an unoriented polypropylene film.

### BACKGROUND

A polypropylene film has good rigidity and heat resistance while being inexpensive, and therefore, it is often used as a sealant film in a variety of packaging materials for food packaging and so on. Up to now, various polypropylene films usable as a sealant film have been developed and proposed (see, for example, Patent Literature 1 to Patent Literature 4).

### CITATION LIST

### PATENT LITERATURE

Patent Literature 1: Jpn. Pat. Appln. KOKAI Publication No. 2003-119298
Patent Literature 2: Jpn. Pat. Appln. KOKAI Publication No. 2008-255285
Patent Literature 3: Japanese Patent No. 3628772
Patent Literature 4: Jpn. Pat. Appln. KOKAI Publication No. 2023-41516

### SUMMARY

### TECHNICAL PROBLEM

In recent years, research on polypropylene monomaterial packaging materials that use a biaxially oriented polypropylene (OPP) film substrate and an unoriented or cast polypropylene (CPP) film has been ongoing in the aim of improving the recyclability of packaging materials. However, since an OPP film has a low melting point as compared to films that have been conventionally used as a substrate, such as a biaxially oriented polyamide or nylon (ONy) film and a biaxially oriented polyester or polyethylene terephthalate (PET) film, there is an issue that the OPP film cannot undergo high-temperature heat sealing for a bag making process. An unoriented polypropylene film is therefore demanded to have a low-temperature sealing property so that it enables appropriate heat sealing to be performed even at a lowered heat-sealing temperature.

In order for an unoriented polypropylene film to show the low-temperature sealing property, use of, for example, a propylene-ethylene random copolymer which has a relatively low melting point among polypropylenes has been tried. However, since this material has a low crystallinity, the produced film tends to have a flat surface with low roughness, which is often insufficient to provide an expected slipperiness. Also, since a propylene-ethylene random copolymer has a low softening point as compared to materials having a high crystallinity such as a homopolymer of polypropylene, the produced film tends to create a tacky feeling and could easily cause blocking. Consequently, use of a propylene-ethylene random copolymer would hinder the roll-up action during film formation or the positioning between the front and back films during pouch production, and can easily produce defects.

To avoid such issues, various methods for reducing friction between the films and preventing blocking are known, but these methods rather involve many problems as will be discussed.

For example, consideration will be given to a method in which a film is formed with an addition of a lubricant to a polypropylene resin so as to impart a slipperiness to the film surface. Concerns with this method are negative effects such as the following. Variations in slipperiness within the film surface can occur depending on the cooling conditions adopted in the film formation, which would then lead to uneven bleeding degrees of the lubricant depending on the storage environment of the temperature, humidity, etc., after the film formation. The lubricant may intrude into the contents in the case where the produced film is used as a packaging material.

There is also a method of forming a film with an addition of an anti-blocking (AB) agent to a polypropylene resin so as to impart a dent and rise profile over the film surface by exposing the anti-blocking agent. Such a method could also cause negative effects such as detachment of the anti-blocking agent and intrusion of the same into the contents in the case where the film is used as a packaging material.

There is still another method for film formation in which a dent and rise structure is formed on a cooling roll and transferred to the film surface. This method can easily produce processing failure due to an insufficiently cooled molten resin sticking around the cooling roll if a relatively thick film is to be formed at a high speed. In addition, if this method adopts an air blowing technique to press the molten resin against the cooling roll instead of using a nip roll to press the molten resin against the cooling roll, transfer of the dent and rise structure to the film surface would be difficult.

The present invention has been made in view of the above circumstances, and the objects of the present invention include providing an unoriented polypropylene film excellent in low-temperature sealing property, slipperiness, and impact resistance and also suitable as a sealant film for packaging materials.

According to one aspect of the present invention, there is provided an unoriented polypropylene film comprising a first layer having a heat sealing property, the first layer including a propylene-ethylene random copolymer (A) having a melting point of 140 to 148 °C, and a propylene-ethylene block copolymer (B), a content of the propylene-ethylene random copolymer (A) being in a range of 65 to 90 mass%, a content of the propylene-ethylene block copolymer (B) being in a range of 35 to 10 mass%,
wherein the propylene-ethylene block copolymer (B) has a sea-island structure in which domains containing a propylene-ethylene copolymer elastomer are dispersed in a matrix containing a propylene polymer, the propylene-ethylene copolymer elastomer having a mass average molecular weight Mw in a range of 500,000 or more and 1,000,000 or less, and a molecular weight distribution Mw/Mn which is a ratio of the mass average molecular weight Mw to a number average molecular weight Mn in a range of 10 or more and 25 or less, the first layer being free from any of a lubricant, an anti-blocking agent, and a coloring material.

According to another aspect of the present invention, there is provided the unoriented polypropylene film according to the aspect, further comprising a second layer containing a propylene-ethylene block copolymer (C) and a propylene-ethylene copolymer elastomer (D).

According to still another aspect of the present invention, there is provided the laminate according to the aspect, in which in the second layer, a content of the propylene-ethylene block copolymer (C) is in a range of 90 to 50 mass% and a content of the propylene-ethylene copolymer elastomer (D) is in a range of 10 to 50 mass%.

According to still another aspect of the present invention, there is provided the laminate according to any one of the above aspects, in which the second layer has a thickness of 30 µm or more.

According to still another aspect of the present invention, there is provided the laminate according to any one of the above aspects, in which the second layer contains a white pigment.

According to still another aspect of the present invention, there is provided a packaging material comprising: the unoriented polypropylene film according to any one of the above aspects; and one or more layers formed on the unoriented polypropylene film, wherein the first layer is an outermost layer.

According to still another aspect of the present invention, there is provided a package comprising the packaging material according to the aspect.

According to still another aspect of the present invention, there is provided a packaged article comprising: the package according to the aspect; and an article accommodated in the package.

According to the present invention, an unoriented polypropylene film excellent in low-temperature sealing property, slipperiness, and impact resistance and suitable as a sealant film for packaging materials is provided.

### BRIEF DESCRIPTION OF THE DRAWINGS

FIG. 1 is a sectional view of an unoriented polypropylene film according to an embodiment of the present invention.
FIG. 2 is a sectional view showing an exemplary packaging material that includes the unoriented polypropylene film shown in FIG. 1.

### DETAILED DESCRIPTION

Embodiments of the present invention will be described with reference to the drawings. The embodiments described below each depict a more specific form of one of the aspects set forth above. The features described below may each be incorporated independently or may be incorporated in any combination into each of the above aspects.

Also, each embodiment will be set forth as an example of configurations for concretely implementing the technical ideas of the present invention, and these technical ideas of the present invention are not limited by the below described component materials, shapes, structures, or the like. The technical ideas of the present invention can adopt various modifications within the technical scope defined by the appended claims.

Note that the elements having the same or similar functions are denoted by the same reference signs in the drawings referred to by the following description, and the description will omit repetitive explanations. Also, the drawings are schematic, and what are shown in the drawings, such as a relationship between the size or dimension in one direction and that in another direction, and a relationship between the size or dimension of a given member and that of another member, may differ from the actual ones.

### <1> Unoriented Polypropylene Film

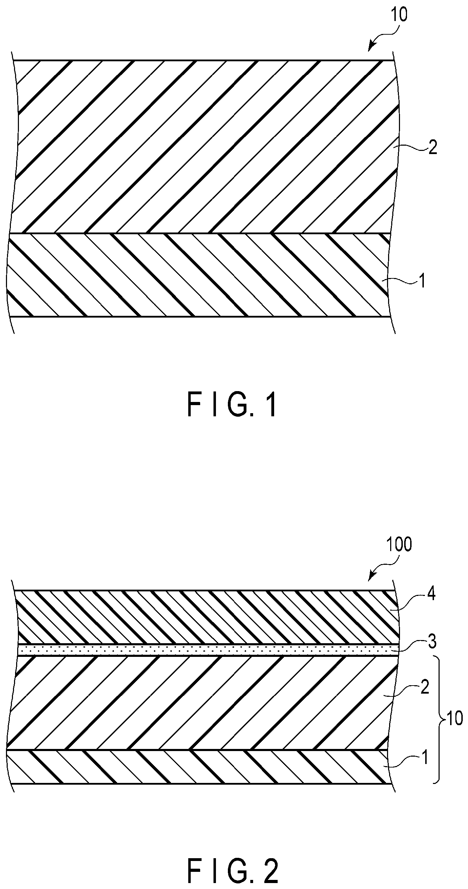

FIG. 1 is a sectional view of an unoriented polypropylene film according to an embodiment of the present invention. FIG. 1 shows an unoriented polypropylene film 10 which includes a first layer 1 and a second layer 2. The unoriented polypropylene film 10 may be, as another embodiment, a monolayer film formed only of the first layer 1, or it may be, as still another embodiment, a multilayer film formed of three or more layers that include a further layer or layers (not shown in the figure) in addition to the first layer 1 and the second layer 2.

The unoriented polypropylene film 10 is an unoriented polypropylene-based film which contains polypropylene as a main component and which has a heat-sealing property. As will be described in more detail, the unoriented polypropylene film 10 has an excellent low-temperature sealing property, an excellent sliding property, and an excellent impact resistance while consisting mainly of polypropylene, and does not incur a bleeding out problem of additives. Accordingly, the unoriented polypropylene film 10 can be suitably used as a sealant film of a packaging material that meets the demand for a good recyclable monomaterial.

### <1.1> First Layer

The first layer 1 is an unoriented polypropylene-based film which contains propylene as a main component and which has a heat-sealing property. As one example, in an instance where the unoriented polypropylene film 10 is employed as a sealant film of a packaging material, the first layer 1 is used as the outermost layer of the laminate constituting the packaging material (see FIG. 2), and parts of the first layer 1 are thermally fused to each other to form a package. The first layer 1 is free from any of a lubricant, an anti-blocking agent, and a coloring material, and therefore, it does not cause the bleeding out problem of additives. As such, the unoriented polypropylene film 10 is particularly suitably used as a sealant film of a packaging material for the packaging of food.

The first layer 1 contains a propylene-ethylene random copolymer (A) and a propylene-ethylene block copolymer (B). By using the propylene-ethylene random copolymer (A) and the propylene-ethylene block copolymer (B) in combination, and controlling the ratio thereof, both the heat resistance and the low-temperature sealing property can be achieved at a high level.

From the viewpoint of concurrently achieving the heat resistance and the low-temperature sealing property, it is preferred that the melting point of the propylene-ethylene block copolymer (B) be higher than that of the propylene-ethylene random copolymer (A). The difference (Tmb - Tma) between the melting point (Tma) of the propylene-ethylene random copolymer (A) and the melting point (Tmb) of the propylene-ethylene block copolymer (B) is preferably in the range of 10 to 45 °C, more preferably in the range of 10 to 40 °C, and furthermore preferably in the range of 10 to 25 °C.

The melting point of the propylene-ethylene random copolymer (A) may be, in one example, in the range of 120 to 148 °C, and in another example, in the range of 124 to 147 °C, and in still another example, in the range of 140 to 148 °C.

In the first layer 1, the propylene-ethylene block copolymer (B) has a sea-island structure in which, in a propylene polymer-containing matrix, domains containing a propylene-ethylene copolymer elastomer having a specific mass average molecular weight Mw and a specific molecular weight distribution Mw/Mn are dispersed. In this embodiment, the mass average molecular weight Mw and the molecular weight distribution Mw/Mn of the propylene-ethylene copolymer elastomer constituting the domains dispersed in the matrix are adjusted to specific ranges, so that morphology of the film surface is controlled to impart an appropriate dent and rise profile over the film surface without using a lubricant or an anti-blocking agent. The unoriented polypropylene film 10 therefore has a surface with an excellent slipperiness. Also, the propylene-ethylene block copolymer (B) constituting the first layer 1 and having the sea-island structure of the dispersed domains containing a propylene-ethylene copolymer elastomer contributes to the improvement of impact resistance of the unoriented polypropylene film 10 as well as the retainment of the excellent impact resistance even under a low-temperature environment.

A film surface that has a proper dent and rise profile and a good slipperiness shows a surface roughness within an appropriate range and a low static friction coefficient. In the present embodiment, the surface of the first layer 1 has, for example, an arithmetic average roughness Ra which is measured by a method described later and which is preferably in the range of 0.08 or more and 0.2 or less, more preferably in the range of 0.10 or more and 0.18 or less. Also, the surface of the first layer 1 has a static friction coefficient µS which is measured by a method described later and which is preferably less than 1.2, more preferably 1.0 or less.

### (Propylene-ethylene Random Copolymer (A))

The propylene-ethylene random copolymer (A) may be obtained by, for example, copolymerizing a comonomer, i.e., ethylene, in a main monomer composed of propylene, using a Ziegler-Natta catalyst, a metallocene catalyst, or a half metallocene catalyst. With the first layer 1 containing the propylene-ethylene random copolymer (A), it is possible to easily obtain an excellent low-temperature sealing property.

As the propylene-ethylene random copolymer (A), the one having a melting point in the range of 140 to 148 °C may be employed. By using a copolymer having a melting point within this range, an excellent low-temperature sealing property can be easily obtained while retaining the heat resistance.

The propylene-ethylene random copolymer (A) may have an ethylene content of 6.0 mass% or less from the viewpoint of heat resistance. The heat resistance here is intended to be such a heat resistance as to cause no fusion at the inner surface of the package after being subjected to treatment under a high retort condition (for example, after heat and pressure sterilization at 135 °C). From the same viewpoint, the ethylene content may be 5.5 mass% or less, or 4.5 mass% or less. Also, from the viewpoint of the low-temperature sealing property, the ethylene content may be, for example, 3.0 mass% or more.

Here, the ethylene content of the propylene-ethylene random copolymer (A) may be measured according to the method for quantitative determination of an ethylene content (IR method) as set forth in the Polymer Analysis Handbook, 3rd edition dated May 10, 2013, edited by the Polymer Analysis Conference, Japan Society for Analysis, pages 412 to 413.

### (Propylene-ethylene Block Copolymer (B))

The propylene-ethylene block copolymer (B) has a sea-island structure in which domains containing a propylene-ethylene copolymer elastomer are dispersed in a propylene polymer-containing matrix. In other words, the propylene-ethylene block copolymer (B) has a structure in which a propylene polymer-containing matrix forms a continuous phase and domains containing a propylene-ethylene copolymer elastomer are dispersed as discontinuous phases. This structure may be observed with, for example, a transmission electron microscope (TEM).

The propylene-ethylene copolymer elastomer contained in the domains has a mass average molecular weight Mw in the range of 500,000 or more and 1,000,000 or less, and a molecular weight distribution Mw/Mn, which is a ratio of the mass average molecular weight Mw to the number average molecular weight Mn, in the range of 10 or more and 25 or less. The mass average molecular weight Mw and the molecular weight distribution Mw/Mn of the propylene-ethylene copolymer elastomer contained in the domains are set within such ranges so that, as described above, the morphology of the film surface is controlled to impart an appropriate dent and rise profile to the film surface without using a lubricant or an anti-blocking agent. Thus, the unoriented polypropylene film 10 shows an excellent slipperiness on its film surface without requiring an addition of a lubricant or an anti-blocking agent to the first layer 1.

Put another way, if the mass average molecular weight Mw of the propylene-ethylene copolymer elastomer is less than 500,000, or if the molecular weight distribution Mw/Mn is less than 10, the domains, i.e., dispersed particles, would have smaller sizes and the dent and rise profile of the surface of the first layer 1 would also become small, which can result in an unsatisfactory slipperiness. In order to improve handling characteristics (ease of handling), it is essential for the unoriented polypropylene film 10 to have an appropriate slipperiness.

Also, if the mass average molecular weight Mw of the propylene-ethylene copolymer elastomer is more than 1,000,000, or if the molecular weight distribution Mw/Mn is more than 25, the surface of the first layer 1 can have a poor appearance. In another instance, if the mass average molecular weight Mw exceeds 1,000,000, or if the molecular weight distribution Mw/Mn exceeds 25, the domains would increase their sizes, and the distance between the domains would accordingly be large, which can result in a problem wherein the impact propagation becomes difficult and the impact resistance of the unoriented polypropylene film 10 is deteriorated.

The mass average molecular weight Mw of the propylene-ethylene copolymer elastomer is preferably in the range of 500,000 or more and 1,000,000 or less, more preferably in the range of 600,000 or more and 900,000 or less, and furthermore preferably in the range of 600,000 or more and 850,000 or less. The molecular weight distribution Mw/Mn of the propylene-ethylene copolymer elastomer is preferably in the range of 10 or more and 25 or less, and more preferably in the range of 12 or more and 25 or less. Here, the mass average molecular weight Mw and the number average molecular weight Mn are measured by gel permeation chromatography (GPC), which uses polystyrene as a standard.

With the first layer 1 containing the propylene-ethylene block copolymer (B), an effect of improving the heat resistance of the first layer 1 as compared to the form of employing only the propylene-ethylene random copolymer (A) is further realized in addition to the effects discussed above.

The propylene-ethylene block copolymer (B) may be obtained by continuously performing a step of polymerizing propylene to produce a propylene polymer (polymerization step 1) and a step of copolymerizing propylene and ethylene by gas phase polymerization to produce a propylene-ethylene copolymer elastomer (polymerization step 2). The propylene-ethylene block copolymer (B) is not a block copolymer in which a propylene polymer terminal and a propylene-ethylene copolymer elastomer terminal are bonded to each other, but a type of blended copolymer.

The propylene-ethylene block copolymer (B) may contain the propylene polymer, which constitutes the matrix, in the range of 90 to 60 mass%, and the propylene-ethylene copolymer elastomer, which constitutes the domains, in the range of 10 to 40 mass%. With the propylene-ethylene block copolymer (B) containing these components in such ratios, it is possible to easily obtain an excellent impact resistance. From this viewpoint, the propylene-ethylene block copolymer (B) may contain the propylene polymer in the range of 87.5 to 65 mass% and the propylene-ethylene copolymer elastomer in the range of 12.5 to 35 mass%, or may contain the propylene polymer in the range of 85 to 70 mass% and the propylene-ethylene copolymer elastomer in the range of 15 to 30 mass%.

In the propylene-ethylene block copolymer (B), the propylene-ethylene copolymer elastomer may have an ethylene content in the range of, for example, 20 to 40 mass%. With this ethylene content being 40 mass% or less, the tackiness of the product can be suppressed, and accordingly, excellent productivity can be easily maintained while suppressing an occurrence of contamination due to the tackiness of the product during manufacture. The ethylene content of 20 mass% or more allows for easy obtainment of excellent impact resistance.

The ethylene content in the propylene-ethylene copolymer elastomer may be measured by the same method as that for the ethylene content of the propylene-ethylene random copolymer (A) described above.

As the propylene-ethylene block copolymer (B), the one having a melt flow rate (MFR: ISO 1133) (temperature: 230 °C, load: 2.16 kg) in the range of 0.5 to 2.5 g/10 minutes may be suitably used. With a melt flow rate that is not too low, an extruder deals with a reduced load during a molding process, which can prevent the processing speed from decreasing so that excellent productivity can be easily maintained. Also, a melt flow rate that is not too high is preferred from the viewpoint of impact resistance, and contributes to the maintenance of excellent impact resistance even under a low temperature environment.

In the first layer 1, the content of the propylene-ethylene random copolymer (A), which has a melting point of 140 to 148 °C, is in the range of 65 to 90 mass%, and the content of the propylene-ethylene block copolymer (B) is in the range of 35 to 10 mass%. It is preferred that the content of the propylene-ethylene random copolymer (A) and the content of the propylene-ethylene block copolymer (B) in the first layer 1 be within the above ranges from the viewpoint of achieving both the low-temperature sealing property and the heat resistance.

In the first layer 1, in one example, the content of the propylene-ethylene random copolymer (A) may be in the range of 70 to 90 mass% and the content of the propylene-ethylene block copolymer (B) may be in the range of 30 to 10 mass%, and in another example, the content of the propylene-ethylene random copolymer (A) may be in the range of 75 to 90 mass% and the content of the propylene-ethylene block copolymer (B) may be in the range of 25 to 10 mass%.

In still another example, in the first layer 1, the content of the propylene-ethylene random copolymer (A) may be in the range of 65 to 80 mass% and the content of the propylene-ethylene block copolymer (B) may be in the range of 35 to 20 mass%, and in yet another example, the content of the propylene-ethylene random copolymer (A) may be in the range of 65 to 70 mass% and the content of the propylene-ethylene block copolymer (B) may be in the range of 35 to 30 mass%.

The first layer 1 does not contain any of a lubricant, an anti-blocking agent, and a coloring material.

Since the first layer 1 does not contain a lubricant or an anti-blocking agent, in the unoriented polypropylene film 10, a problem of bleeding out of these additives cannot occur. As such, adopting the unoriented polypropylene film 10 as a sealant film of a packaging material eliminates the risk of a lubricant or an anti-blocking agent intruding into the contents, and the packaging material including the unoriented polypropylene film 10 is suitable as a packaging material of a package for storing food or the like.

The lubricant here is an additive for reducing friction between a multilayer film and a processing apparatus, or between the multilayer films, and examples of the lubricant include bisamides such as an ethylene bisstearamide, higher fatty acid amides such as an oleic acid amide and an erucic acid amide, higher fatty acid metal salts such as a calcium stearate, a zinc stearate, and a montanic acid metal salt, and polyolefin waxes such as a polyethylene wax and a polypropylene wax. The anti-blocking agent refers to an additive for forming irregularities on the surface of the multilayer film to reduce the contact area between the multilayer films, and examples of the anti-blocking agent include an aluminum oxide, talc, diatomaceous earth, a fine silica powder, a polymethyl methacrylate powder, and a silicone resin.

As noted above, the first layer 1 does not contain a coloring material. This is because, if the first layer 1 contains a coloring material, problems such as deterioration of the low-temperature sealing property and desorption of the coloring material could occur.

The coloring material here refers to a colorant such as a pigment or a dye and has a role of, for example, imparting concealing characteristics, light-shielding characteristics, or the like to the packaging material. Concrete examples of the coloring material may be the same as the concrete examples of the coloring material that will be described later in relation to the second layer 2. In the case where it is desired to endow a packaging material with concealing characteristics, light-shielding characteristics, or the like while the unoriented polypropylene film 10 is adopted as a sealant film of the packaging material, a coloring material may be added to the second layer 2 or a layer other than the sealant film constituting the packaging material.

The first layer 1 may contain, as needed, additives other than the lubricant, the anti-blocking agent, and the coloring material in a range that does not hamper the film performance or capability described above. Types of the additives that may be contained in the first layer 1 are appropriately selected according to the application, etc. of the film. Concrete examples of the additives that may be contained in the first layer 1 include an antioxidant, a nucleating agent, an antistatic agent, a neutralizing agent, and so on.

Examples of the antioxidant include a phenol antioxidant, an organic phosphite antioxidant, a thioether antioxidant, and a hindered amine antioxidant. Examples of the nucleating agent include α-nucleating agents such as a sorbitol compound, an organic phosphoric acid ester metal salt compound, an organic carboxylic acid metal salt compound, and a rosin compound, β-nucleating agents such as an amide compound and a quinacridone compound, a benzoic acid metal salt, an alkyl fatty acid salt, talc, and so on.

### <1.2> Second Layer

The second layer 2 is an unoriented polypropylene-based film containing propylene as a main component. The second layer 2 contains a propylene-ethylene block copolymer (C) and a propylene-ethylene copolymer elastomer (D). The unoriented polypropylene film 10 including the second layer 2 is preferred especially from the viewpoint of impact resistance, and contributes to the maintenance of excellent impact resistance even under a low temperature environment.

### (Propylene-ethylene Block Copolymer (C))

The propylene-ethylene block copolymer (C) may be the same as or different from the propylene-ethylene block copolymer that has been described as the propylene-ethylene block copolymer (A) in the first layer 1. In the case where the propylene-ethylene block copolymer described above is used as the propylene-ethylene block copolymer (C), the propylene-ethylene block copolymer (A) contained in the first layer 1 and the propylene-ethylene block copolymer (C) contained in the second layer 2 may be equivalent to or different from each other. If mutually different propylene-ethylene block copolymers are used, the propylene-ethylene block copolymer (A) used in the first layer 1 and the propylene-ethylene block copolymer (C) used in the second layer 2 may be respectively selected from appropriate materials, from the viewpoint of imparting an excellent slipperiness to the first layer 1 and imparting an excellent impact resistance to the second layer 2.

### (Propylene-ethylene Copolymer Elastomer (D))

The propylene-ethylene copolymer elastomer (D) preferably has a ratio of the propylene content to the ethylene content (propylene content/ethylene content) in the range of 1.5 to 4.0. With the ratio of the propylene content to the ethylene content being within this range, an excellent impact resistance can be easily obtained.

The ethylene content in the propylene-ethylene copolymer elastomer (D) may be measured by the same method as that for the ethylene content of the propylene-ethylene random copolymer (A) described above.

As the propylene-ethylene copolymer elastomer (D), the one having a melt flow rate (MFR: ISO 1133) (temperature: 230 °C, load: 2.16 kg) in the range of 0.5 to 3.5 g/10 minutes may be suitably used. With a melt flow rate that is not too low, an extruder deals with a reduced load during a molding process, which can prevent the processing speed from decreasing so that excellent productivity can be easily maintained. Also, with a melt flow rate that is not too high, the propylene-ethylene block copolymer (C) and the propylene-ethylene copolymer elastomer (D) can have an improved compatibility to each other, which can enhance the impact resistance and allows for easy maintenance of the excellent impact resistance even under a low temperature environment.

In the second layer 2, the content of the propylene-ethylene block copolymer (C) is preferably in the range of 90 to 50 mass%, and the content of the propylene-ethylene copolymer elastomer (D) is preferably in the range of 10 to 50 mass%. It is preferred that the content of the propylene-ethylene block copolymer (C) and the content of the propylene-ethylene copolymer elastomer (D) be within these ranges from the viewpoint of achieving both the heat resistance and the impact resistance.

In the second layer 2, in one example, the content of the propylene-ethylene block copolymer (C) may be in the range of 90 to 60 mass% and the content of the propylene-ethylene copolymer elastomer (D) may be in the range of 10 to 40 mass%, and in another example, the content of the propylene-ethylene block copolymer (C) may be in the range of 90 to 70 mass% and the content of the propylene-ethylene copolymer elastomer (D) may be in the range of 10 to 30 mass%.

In still another example, in the second layer 2, the content of the propylene-ethylene block copolymer (C) may be in the range of 87.5 to 50 mass% and the content of the propylene-ethylene copolymer elastomer (D) may be in the range of 12.5 to 50 mass%, and in yet another example, the content of the propylene-ethylene block copolymer (C) may be in the range of 85 to 50 mass% and the content of the propylene-ethylene copolymer elastomer (D) may be in the range of 15 to 50 mass%.

The second layer 2 may contain, as needed, additives in a range that does not hamper the film performance or capability described above. Types of the additives that may be contained in the second layer 2 are appropriately selected according to the application, etc. of the film. Concrete examples of the additives that may be contained in the second layer 2 include a coloring material, an antioxidant, a nucleating agent, an antistatic agent, a neutralizing agent, and so on.

The coloring material here refers to a colorant such as a pigment or a dye. In the case where the unoriented polypropylene film 10 is used as a sealant film of a packaging material, the coloring material may be added to the second layer 2 so as to endow the packaging material with concealing characteristics, light-shielding characteristics, or the like. Here, it is also possible to avoid the problems discussed above, such as the deterioration of the low-temperature sealing property and desorption of the coloring material that could occur if the coloring material is added to the first layer 1.

Concrete examples of the pigment include white pigments such as a titanium oxide, a zinc oxide, and calcium carbonate, and carbon black. If the addition of the pigment is for the purpose of imparting concealing characteristics, use of a titanium oxide is particularly preferred. From the viewpoint of the concealing characteristics, the average particle size of the titanium oxide may be in the range of 0.10 to 0.50 µm in one example, in the range of 0.15 to 0.40 µm in another example, and in the range of 0.20 to 0.30 µm in still another example. The average particle size of the titanium oxide here is a value measured by a laser diffraction/scattering method.

Also, from the viewpoint of the concealing characteristics, the recyclability, and the impact resistance, the content of the titanium oxide is preferably in the range of 0.10 to 30 mass% based on the total mass of the second layer 2. In particular, from the viewpoint of the concealing characteristics, the content of the titanium oxide may be 0.10 mass% or more, 1 mass% or more, 5 mass% or more, or 7 mass% or more. From the viewpoint of the recyclability and the impact resistance, the content of the titanium oxide may be 30 mass% or less, 23 mass% or less, 20 mass% or less, 15 mass% or less, 12 mass% or less, or 8 mass% or less.

The unoriented polypropylene film 10 may have a thickness set as appropriate according to layer configurations, applications, costs, and so on. The layer configurations may include, in addition to the double-layer configuration shown in FIG. 1, a single-layer configuration in the case where the second layer 2 is omitted, and a multilayer configuration of three or more layers in the case where one or more other layers not shown in FIG. 1 are further employed. Such an other layer or other layers may be interposed between the first layer 1 and the second layer 2, or may be formed on the surface of the second layer 2 that is opposite to the surface on which the first layer 1 is formed. The unoriented polypropylene film 10 adopted as a sealant film of a packaging material may have a thickness of, for practical use, 100 µm or less, which may be in the range of 50 to 80 µm.

The first layer 1 may have a thickness set as appropriate according to application, cost, etc., in consideration of the performance or capability of the first layer 1 discussed above. The thickness of the first layer 1 may be, for example, in the range of 6 to 15 µm. Also, in an instance where the unoriented polypropylene film 10 is a multilayer film having two or more layers, the thickness of the first layer 1 may be in the range of 10 to 20% based on the thickness of the unoriented polypropylene film 10. A thickness of the first layer 1 that is not too small is preferred from the viewpoint of heat seal strength, etc. Also, a thickness of the first layer 1 that is not too large is preferred from the viewpoint of the impact resistance, etc. of the film.

The thickness of the second layer 2 may be 30 µm or more. This allows the impact resistance of the film to be easily realized so that damage would hardly occur even if the film is repeatedly dropped. From this viewpoint, the thickness of the second layer 2 may be 35 µm or more, or may be 40 µm or more. In consideration of cost, etc., the thickness of the second layer 2 may be 75 µm or less for practical use.

### <1.3> Method for Manufacturing Unoriented Polypropylene Film

The unoriented polypropylene film 10 may be manufactured through a known method. For example, a method for thermoforming each of the first layer 1 and the second layer 2 may be any of the melt-kneading method that uses a general mixing machine such as a single-screw extruder, a twin-screw extruder, or a multi-screw extruder, the method of dissolving or dispersedly mixing components and then heating and removing a solvent, and so on. In consideration of workability, a single-screw extruder or a twin-screw extruder may be used. Examples of the screws in the case of using a single-screw extruder include a full flight screw, a screw with a mixing element, a barrier flight screw, and a fluted screw, and such screws may be used without particular limitations. In the case of a twin-screw kneading device, it is possible to employ, without particular limitations, a co-rotating twin-screw extruder, a counter-rotating twin-screw extruder, or others, with the screw shape being a full flight screw or of a kneading disc type, etc.

In the method mentioned above, layer formation and lamination may be carried out by melting the raw materials for the respective layers using a single-screw extruder, a twin-screw extruder, or the like and then forming a film using a T-die via a feed block or a multi-manifold.

The obtained unoriented polypropylene film 10 may be subjected to a surface modification treatment as needed in order to be more suited to the subsequent steps. As an example, the second layer 2 may be subjected to a surface modification treatment so as to improve the printability or lamination suitability. Examples of the surface modification treatment include a treatment for generating functional groups through oxidization of the film surface, such as a corona discharge treatment, a plasma treatment, and a flame treatment, and a modification treatment through a wet process for coating and forming an easy adherence layer.

### <2> Packaging Material

The unoriented polypropylene film 10 may be suitably used as a sealant film which forms a part of a packaging material. The packaging material including the unoriented polypropylene film 10 includes, in addition to the unoriented polypropylene film 10, one or more other layers formed on the unoriented polypropylene film 10, with the first layer 1 serving as the outermost layer.

FIG. 2 is a sectional view showing an exemplary packaging material that includes the unoriented polypropylene film 10 shown in FIG. 1. The packaging material 100 shown in FIG. 2 includes the unoriented polypropylene film 10 as a sealant film, an adhesive layer 3, and a substrate 4. In the packaging material 100, the second layer 2 faces the substrate 4 with the adhesive layer 3 interposed therebetween. The first layer 1 is the outermost layer of the packaging material 100.

Examples of the substrate 4 include resin films such as a biaxially oriented polypropylene (OPP) film, a biaxially oriented polyamide or nylon (ONy) film, and a biaxially oriented polyester or polyethylene terephthalate (PET) film, resin films (transparent vapor-deposited films) obtained by providing a metal oxide vapor-deposited layer on the surfaces of such resin films, printing layers, and metal foils (aluminum foils). The substrate 4 may be a single layer formed of any one of these materials, or may be a laminate of two or more of the materials. In the case where the substrate 4 is a laminate, each layer may be laminated via an adhesive layer.

From the viewpoint of gas barrier characteristics of the packaging material 100, the substrate 4 may be a resin film having a metal oxide vapor-deposited layer. Examples of the metal oxide that constitutes the metal oxide vapor-deposited layer include silica and alumina. The resin film may be laminated in such an arrangement that the metal oxide vapor-deposited layer faces the unoriented polypropylene film 10 from the viewpoint of protection of the metal oxide vapor-deposited layer. The resin film may have the respective metal oxide vapor-deposited layers on both surfaces thereof.

From the viewpoint of the recyclability of the packaging material 100, the substrate 4 may be a biaxially oriented polypropylene (OPP) film. The packaging material 100 obtained by adopting a biaxially oriented polypropylene film as the substrate 4 may be referred to as a monomaterial packaging material.

From the viewpoint of gas barrier characteristics and recyclability of the packaging material 100, the substrate 4 may be a laminate of a resin film having a metal oxide vapor-deposited layer and a biaxially oriented polypropylene film. That is, the packaging material 100 may include the unoriented polypropylene film 10, a resin film having a metal oxide vapor-deposited layer, and a biaxially oriented polypropylene film in this order. In particular, from the viewpoint of the recyclability of the packaging material 100, the resin film having a metal oxide vapor-deposited layer may be a biaxially oriented polypropylene film having a metal oxide vapor-deposited layer.

As the material of the adhesive layer 3, for example, a polyester-isocyanate resin, a urethane resin, a polyether resin, an acid-modified product of polyolefin, etc. may be used.

The packaging material 100 may be manufactured through a normal dry lamination method where the unoriented polypropylene film 10 and the substrate 4 are bonded to each other via the adhesive layer 3 as described above. Note, however, that the packaging material 100 may also be manufactured through a method of directly extruding the unoriented polypropylene film 10 onto the substrate 4 for lamination.

The configuration of the packaging material 100 may be adjusted as appropriate according to the characteristics required of the packages, for example, barrier characteristics that meet the quality retention period for food to be packaged, sizes and impact resistance capable of coping with the content mass, visibility of the contents, recyclability, and so on.

### <3> Package

The packaging material 100 described above may be used in packages.

According to one example, packages may be bags, such as a flat pouch, a standing pouch, and a gusseted pouch. Such bags may be manufactured by arranging the peripheral portions of one or more film pieces cut out from the packaging material 100 in such a manner that their respective first layers 1 having a heat-sealing property overlap and contact each other, and then heat-sealing the first layers 1 with each other.

According to another example, the packages may each include an opened container main body and a lid adapted to close the opening. A film piece cut out from the packaging material 100 may be used as the lid.

### <4> Packaged Article

The packaged article includes the package and an article accommodated therein. The content may be a liquid, a solid, or a mixture thereof. The content may also be, for example, food, drugs, or sensitive electronic components.

### Examples

A description will be given of the tests that were conducted in connection with the present invention.

### (1) Production of Unoriented Polypropylene Film

### (1.1) Example 1

The unoriented polypropylene film 10 shown in FIG. 1 was produced by the following method.

First, a propylene-ethylene random copolymer (A), a propylene-ethylene block copolymer (B), a propylene-ethylene block copolymer (C), and a propylene-ethylene copolymer elastomer (D) shown below were prepared as raw materials.

### (Propylene-ethylene Random Copolymer (A))

A propylene-ethylene random copolymer having a melting point of 146 °C and an ethylene content of 3.4 mass%.

The melting point and the ethylene content were measured by the methods described later.

### (Propylene-ethylene Block Copolymer (B))

A propylene-ethylene block copolymer (Bα) containing 81.5 mass% of a propylene polymer and 18.5 mass% of an ethylene-propylene copolymer, with the ethylene content in the ethylene-propylene copolymer being 36.2 mass%.

### (Propylene-ethylene Block Copolymer (C))

The same resin as the propylene-ethylene block copolymer (Bα) which was prepared as the propylene-ethylene block copolymer (B) was used.

### (Propylene-ethylene Copolymer Elastomer (D))

Catalloy (registered trademark) Q100F (trade name) (manufactured by Lyondell Basell) was used as the propylene-ethylene copolymer elastomer. This elastomer had a melt flow rate (MFR: ISO 1133) (temperature: 230 °C, load: 2.16 kg) of 0.6 g/10 min, and a propylene content/ethylene content ratio of 2.7.

Next, for the formation of the first layer 1, a resin mixture 1 was prepared by mixing 90 mass% of the propylene-ethylene random copolymer (A) and 10 mass% of the propylene-ethylene block copolymer (Bα) in a pellet state.

Also, for the formation of the second layer 2, a resin mixture 2 was prepared by mixing 85 mass% of the propylene-ethylene block copolymer (C) and 15 mass% of the propylene-ethylene copolymer elastomer (D) in a pellet state.

Subsequently, each of the resin mixture 1 and the resin mixture 2 was fed to an extruder that was temperature adjusted to 250 °C, kneaded in a molten state, and stacked using a T-die extruder having a feed block so as to form the first layer 1 with a thickness of 10 µm and the second layer 2 with a thickness of 50 µm, thereby obtaining an unoriented polypropylene film.

In the obtained unoriented polypropylene film, the first layer 1 contained the propylene-ethylene block copolymer (Bα) in which a mass average molecular weight Mw of the propylene-ethylene copolymer elastomer that was contained in the domains dispersed in the propylene polymer was 660,000, and a molecular weight distribution Mw/Mn, i.e., a ratio of the mass average molecular weight Mw to the number average molecular weight Mn, was 13.5.

Note that the mass average molecular weight Mw and the number average molecular weight Mn of the propylene-ethylene copolymer elastomer contained in the domains were measured by the method described later.

### <Measurement Methods>

### • Melting Point

Differential scanning calorimetry (JIS K 7121) was adopted, in which the temperature was raised from 25 °C to 230 °C at a heating rate of 10 °C/min, then the temperature was lowered from 230 °C to 25 °C at a cooling rate of 10 °C/min, and thereafter the temperature was again raised from 25 °C to 230 °C at a heating rate of 10 °C/min, and the melting peak temperature observed in the second temperature rising step was measured as the melting point.

### • Ethylene Content

The ethylene content was measured according to the quantitative method for determining an ethylene content (IR method) described in Polymer Analysis Handbook (May 10, 2013, 3rd edition) edited by Polymer Analysis Conference of Japan Society for Analysis, pages 412 to 413.

### • Mass Average Molecular Weight Mw and Number Average Molecular Weight Mn

The propylene-ethylene copolymer elastomer contained in the domains of the propylene-ethylene block copolymer (Bα) was separated by the following procedure, and then the mass average molecular weight Mw and the number average molecular weight Mn were measured by gel permeation chromatography (GPC). The first layer 1 taken out from the unoriented polypropylene film produced above was used as a sample.

### Separation Procedure:

20 mg of the first layer 1 was collected from the unoriented polypropylene film, and 20 mL of a mobile phase for GPC measurement was added to the collected first layer 1, followed by shaking and dissolution at 145 °C. The solution was subjected to heat filtration through a sintered filter having a pore size of 1.0 µm, and the GPC measurement was conducted on the obtained filtrate.

### (Detailed Conditions)

Column: TSKgel GMH6-HT × 2 + TSKgel GMH6-HTL × 2, 7.5 × 300 mm (Tosoh)
Column temperature: 140 °C
Mobile phase: o-dichlorobenzene (containing 0.025 mass% of dibutylhydroxytoluene) Flow amount:
   1.0 mL/min
Injection amount: 0.4 mL
Detector: Refractive index detector (RI)
Column calibration: Monodisperse PS (TSKgel standard polystyrene; Tosoh)
Molecular weight calibration: Relative calibration method (PS conversion)
Apparatus: HLC-8321GPC / HT-type high temperature gel permeation chromatograph (Tosoh)
Analysis software: Empower3 (Nihon Waters)

### (1.2) Example 2

An unoriented polypropylene film was obtained in the same manner as in Example 1 except that the resin mixture 1 for the formation of the first layer 1 was replaced with a resin mixture containing 80 mass% of the propylene-ethylene random copolymer (A) and 20 mass% of the propylene-ethylene block copolymer (Bα).

### (1.3) Example 3

An unoriented polypropylene film was obtained in the same manner as in Example 1 except that the resin mixture 1 for the formation of the first layer 1 was replaced with a resin mixture containing 65 mass% of the propylene-ethylene random copolymer (A) and 35 mass% of the propylene-ethylene block copolymer (Bα).

### (1.4) Example 4

A white pigment master batch containing 60 mass% of titanium oxide fine particles as a white pigment and a polypropylene homopolymer as a base resin was prepared. An unoriented polypropylene film was obtained in the same manner as in Example 2 except that the resin mixture 2 for the formation of the second layer 2 was replaced with a resin mixture containing 70 mass% of the propylene-ethylene block copolymer (C), 15 mass% of the propylene-ethylene copolymer elastomer (D), and 15 mass% of the white pigment master batch.

### (1.5) Example 5

An unoriented polypropylene film was obtained in the same manner as in Example 2 except that the thickness of the second layer 2 was changed from 50 µm to 25 µm.

### (1.6) Example 6

An unoriented polypropylene film was obtained in the same manner as in Example 2 except that the thickness of the second layer 2 was changed from 50 µm to 30 µm.

### (1.7) Example 7

An unoriented polypropylene film was obtained in the same manner as in Example 2 except that the thickness of the second layer 2 was changed from 50 µm to 60 µm.

### (1.8) Example 8

An unoriented polypropylene film was obtained in the same manner as in Example 2 except that the resin mixture 2 for the formation of the second layer 2 was replaced with a resin made of 100 mass% of the propylene-ethylene block copolymer (C).

### (1.9) Example 9

An unoriented polypropylene film was obtained in the same manner as in Example 2 except that the propylene-ethylene block copolymer (Bα) for the formation of the first layer 1 was replaced with a propylene-ethylene block copolymer (Bβ).

In the obtained unoriented polypropylene film, the first layer 1 contained the propylene-ethylene block copolymer (Bβ) in which a mass average molecular weight Mw of the propylene-ethylene copolymer elastomer contained in the domains was 850,000, and a molecular weight distribution Mw/Mn was 25.

### (1.10) Example 10

An unoriented polypropylene film was obtained in the same manner as in Example 2 except that the propylene-ethylene block copolymer (Bα) for the formation of the first layer 1 was replaced with a propylene-ethylene block copolymer (Bγ).

In the obtained unoriented polypropylene film, the first layer 1 contained the propylene-ethylene block copolymer (Bγ) in which a mass average molecular weight Mw of the propylene-ethylene copolymer elastomer contained in the domains was 600,000, and a molecular weight distribution Mw/Mn was 18.

### (1.11) Comparative Example 1

An unoriented polypropylene film was obtained in the same manner as in Example 2 except that the propylene-ethylene block copolymer (Bα) for the formation of the first layer 1 was replaced with a propylene-ethylene block copolymer (Bδ).

In the obtained unoriented polypropylene film, the first layer 1 contained the propylene-ethylene block copolymer (Bδ) in which a mass average molecular weight Mw of the propylene-ethylene copolymer elastomer contained in the domains was 365,000, and a molecular weight distribution Mw/Mn was 5.2.

### (1.12) Comparative Example 2

An unoriented polypropylene film was obtained in the same manner as in Example 2 except that the resin mixture 1 for the formation of the first layer 1 was replaced with a resin made of 100 mass% of the propylene-ethylene random copolymer (A).

### (1.13) Comparative Example 3

An unoriented polypropylene film was obtained in the same manner as in Example 2 except that the resin mixture 1 for the formation of the first layer 1 was replaced with a resin mixture containing 50 mass% of the propylene-ethylene random copolymer (A) and 50 mass% of the propylene-ethylene block copolymer (Bα).

### (1.14) Comparative Example 4

An unoriented polypropylene film was obtained in the same manner as in Example 2 except that the propylene-ethylene block copolymer (Bα) for the formation of the first layer 1 was replaced with a homopolymer (E) of propylene.

### (1.15) Comparative Example 5

An unoriented polypropylene film was obtained in the same manner as in Example 2 except that the resin mixture 1 for the formation of the first layer 1 was replaced with a resin mixture obtained by adding 0.2 mass% of erucamide as a lubricant to the resin mixture 1.

### (1.16) Comparative Example 6

A white pigment master batch containing 60 mass% of titanium oxide fine particles as a white pigment and a polypropylene homopolymer as a base resin was prepared. An unoriented polypropylene film was obtained in the same manner as in Example 2 except that the resin mixture 1 for the formation of the first layer 1 was replaced with a resin mixture containing 65 mass% of the propylene-ethylene random copolymer (A), 20 mass% of the propylene-ethylene block copolymer (Bα), and 15 mass% of the white pigment master batch.

### (2) Evaluation

The films obtained in the respective examples were evaluated as follows. The results are shown in Tables 1 and 2.

### (2.1) Slipperiness

The slipperiness was evaluated from a surface roughness and a static friction coefficient.

### (Surface Roughness)

For each film, an arithmetic average roughness Ra of the surface of the first layer 1 was measured by performing a scan in the film forwarding direction at a measuring speed of 0.5 mm/sec with a cut-off value λc set to 0.8 mm. As the apparatus, a compact surface roughness measuring instrument manufactured by Mitutoyo Corporation was used. Based on the measurement results, the slipperiness was evaluated according to the following criteria.
A: The arithmetic average roughness Ra is in the range of 0.08 or more and 0.2 or less, the surface dent and rise profile is controlled in an appropriate range, and the slipperiness is good.
B: The arithmetic average roughness Ra is more than 0.2, the surface dent and rise profile is large, and a negative effect on the drop resistance is a concern.
C: The arithmetic average roughness Ra is less than 0.08, the surface dent and rise profile is small, and the slipperiness is insufficient.

### (Static Friction Coefficient)

Each film was cut into a piece having a size of 100 mm in the forwarding direction for film formation × 70 mm in the width direction, and a piece having a size of 160 mm in the forwarding direction × 100 mm in the width direction. A 63-mm square weight having a mass of 200 g was fixed to the front surface side of the second layer 2 of the cut-out film piece having a size of 100 mm in the forwarding direction × 70 mm in the width direction. The first layers 1 of the respective two film pieces were placed to face each other, and the static friction coefficient µS was measured while the film pieces were pulled at a tensile speed of 100 mm/min and a moving speed of 60 mm with the use of a frictional tester manufactured by Toyo Seiki Seisaku-sho, Ltd. Based on the measurement results, the slipperiness was evaluated according to the following criteria.
A: The static friction coefficient µS is less than 1.2, and the slipperiness is good.
B: The static friction coefficient µS is 1.2 or more, and the slipperiness is insufficient.

### (2.2) Low-temperature Sealing Property

The first layers 1 of the respective films were placed to face each other and heat-sealed at a sealing pressure of 0.2 MPa, for a sealing time of 1 second, and with a sealing width of 5 mm with the use of a heat sealer manufactured by Tester Sangyo Co., Ltd. The sealing temperature was adjusted between 140 °C and 160 °C in steps of 2 °C.

Subsequently, each film which had been heat-sealed at the respective temperature was cut into a size of 15 mm width × 80 mm, and T-peeling was performed at a tensile speed of 300 mm/min to measure the heat seal strength of the heat-sealed portion with the use of a tensile tester manufactured by Shimadzu Corporation. The temperature at which the heat seal strength reached 15 N/15 mm or higher was taken as a heat seal onset temperature. Based on the measurement results, the low-temperature sealing property was evaluated according to the following criteria.
A: The heat seal onset temperature is 146 °C or lower.
B: The heat seal onset temperature is 148 °C.
C: The heat seal onset temperature is 150 °C or higher.

### (2.3) Impact Resistance

The first layers 1 of the respective films were placed to face each other and heat-sealed at a sealing pressure of 0.2 MPa, for a sealing time of 1 second, with a sealing width of 5 mm, and at a sealing temperature of 150 °C with the use of a heat sealer manufactured by Tester Sangyo Co., Ltd., thereby preparing a packaging bag that was heat-sealed on three sides other than the short side. The size of the packaging bag was 180 mm × 130 mm. The obtained packaging bag was filled with 150 mL of water, and subsequently, the one side that had not been heat-sealed was heat-sealed tightly to prepare a water-filled bag. This water-filled bag was subjected to a retort treatment under the conditions of 127 °C and 50 minutes and stored at a low temperature of 5 °C for 72 hours. Thereafter, the water-filled bag was tested by being repeatedly dropped from a height of 100 cm toward the floor 100 times in a state where the water-filled bag was uprightly oriented with respect to the floor and in such a manner that the initially heat-sealed short side landed on the floor. The test was conducted on 10 bags in total, and the impact resistance was evaluated according to the following criteria based on a proportion of the bags that was not torn (survival ratio). Here, evaluation "B" is a level at which no problem in practical use is assumed.
A: The survival ratio was 60% or more.
B: The survival ratio was 50% or more and less than 60%.

The survival ratio was less than 50%.

### (2.4) Elution Test

Each film was cut into 110-mm squares, and two of the four corners that are on a given diagonal line were each obliquely cut off by 30 mm. The film was set in a compact one-side extraction jig with the first layer 1 set as a liquid contact surface (liquid contact area: 0.49 dm²), and then 25 mL of 99.5% ethanol was injected, followed by sealing. The resultant was placed in an oven, heated to 60 °C, and allowed to stand for 10 days. The extract was then collected, concentrated by a factor of 25 to about 1.0 ml, and subjected to gas chromatography mass spectrometry.
"N": No fatty acid amide was detected.
"Y": Fatty acid amide was detected.

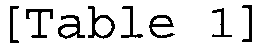

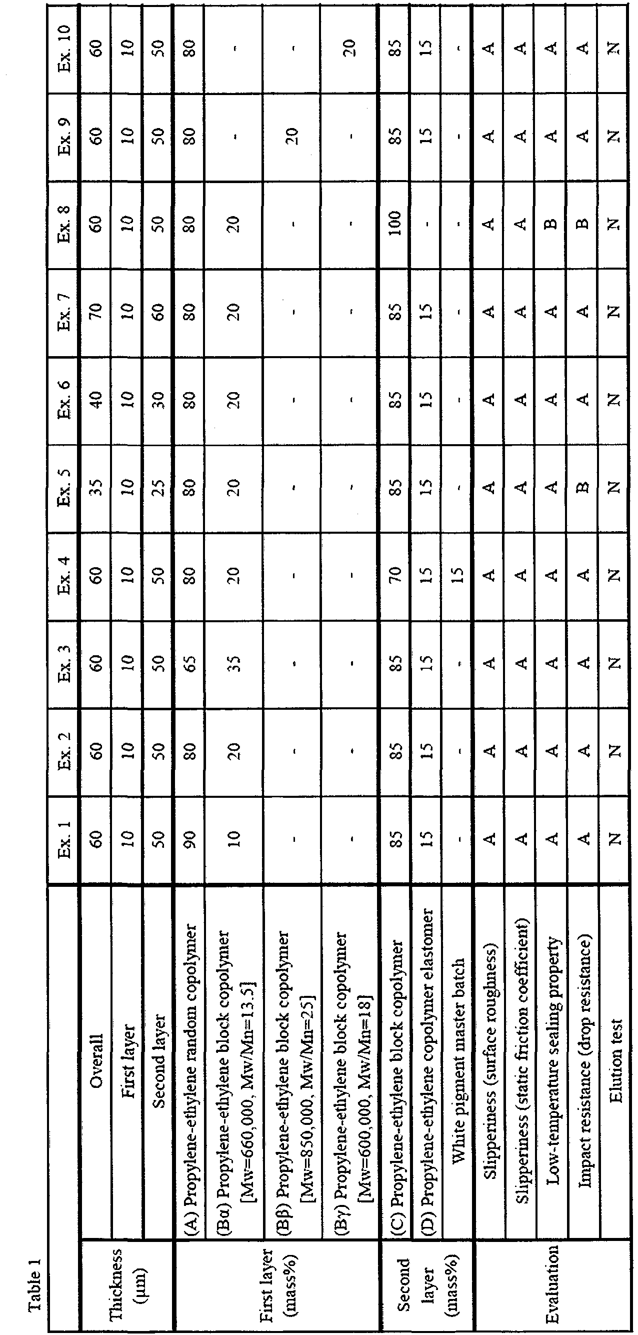

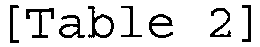

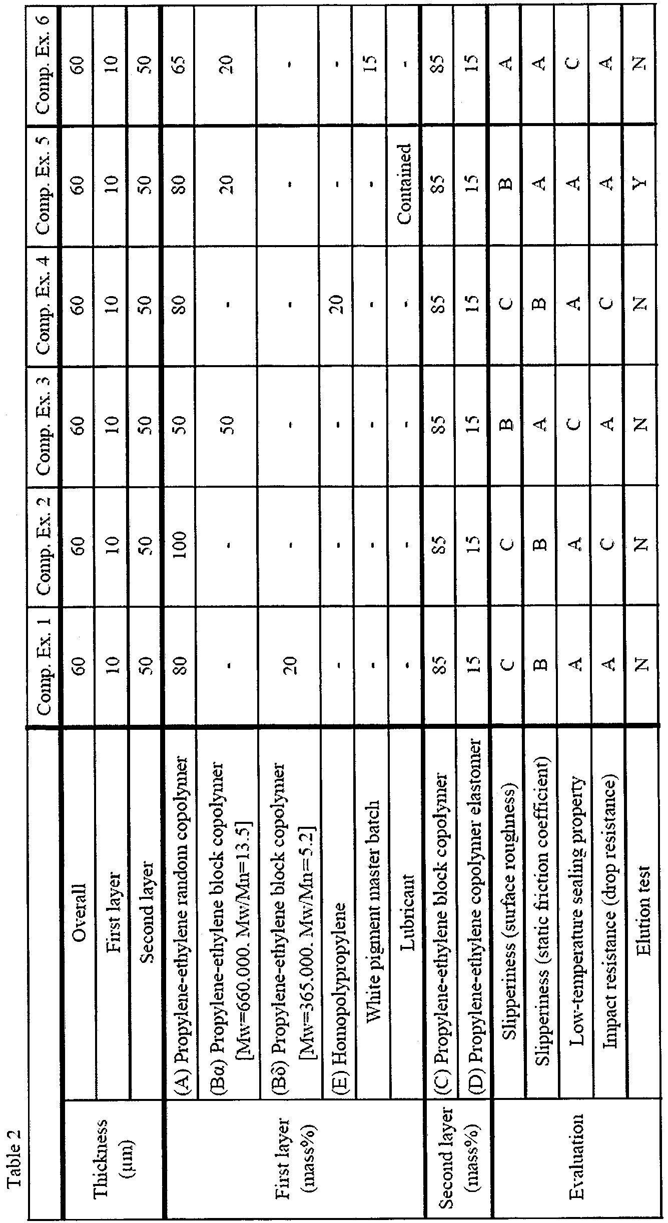

### REFERENCE SIGNS LIST

1 ... first layer, 2 ... second layer, 3 ... adhesive layer, 4 ... substrate, 10 ... unoriented polypropylene film, 100 ... packaging material

## Claims

1. An unoriented polypropylene film comprising a first layer having a heat sealing property, the first layer including a propylene-ethylene random copolymer (A) having a melting point of 140 to 148 °C, and a propylene-ethylene block copolymer (B), a content of the propylene-ethylene random copolymer (A) being in a range of 65 to 90 mass%, a content of the propylene-ethylene block copolymer (B) being in a range of 35 to 10 mass%,
wherein the propylene-ethylene block copolymer (B) has a sea-island structure in which domains containing a propylene-ethylene copolymer elastomer are dispersed in a matrix containing a propylene polymer, the propylene-ethylene copolymer elastomer having a mass average molecular weight Mw in a range of 500,000 or more and 1,000,000 or less, and a molecular weight distribution Mw/Mn which is a ratio of the mass average molecular weight Mw to a number average molecular weight Mn in a range of 10 or more and 25 or less, the first layer being free from any of a lubricant, an anti-blocking agent, and a coloring material.

2. The unoriented polypropylene film according to claim 1, further comprising a second layer containing a propylene-ethylene block copolymer (C) and a propylene-ethylene copolymer elastomer (D).

3. The unoriented polypropylene film according to claim 2, wherein in the second layer, a content of the propylene-ethylene block copolymer (C) is in a range of 90 to 50 mass% and a content of the propylene-ethylene copolymer elastomer (D) is in a range of 10 to 50 mass%.

4. The unoriented polypropylene film according to claim 2 or 3, wherein the second layer has a thickness of 30 µm or more.

5. The unoriented polypropylene film according to any one of claims 2 to 4, wherein the second layer contains a white pigment.

6. A packaging material comprising:
the unoriented polypropylene film according to any one of claims 1 to 5; and
one or more layers formed on the unoriented polypropylene film,
wherein the first layer is an outermost layer.

7. A package comprising the packaging material according to claim 6.

8. A packaged article comprising:
the package according to claim 7; and
an article accommodated in the package.
